# EUROPEAN PATENT APPLICATION

(11) **EP 3 450 786 A1**
(43) Date of publication of application: **06.03.2019**
(21) Application number: 18179099.9
(22) Date of filing: 21.06.2018
(51) Int. Cl.: F16D 41/08

(54) **POWER TRANSMISSION APPARATUS FOR VEHICLE**

(30) Priority: 30.08.2017 JP 2017165636
(71) Applicant: TOYOTA JIDOSHA KABUSHIKI KAISHA, Toyota-shi, Aichi-ken 471-8571 (JP)
(72) Inventor: SHIBATA, Hiroyuki, Toyota-shi, Aichi-ken 471-8571 (JP); SHIOIRI, Hiroyuki, Toyota-shi, Aichi-ken 471-8571 (JP); TOMITA, Mitsuaki, Toyota-shi, Aichi-ken 471-8571 (JP); KATO, Shotaro, Toyota-shi, Aichi-ken 471-8571 (JP); KUROSAKI, Yuki, Toyota-shi, Aichi-ken 471-8571 (JP); OGAWA, Hiroyuki, Toyota-shi, Aichi-ken 471-8571 (JP)
(74) Representative: Cabinet Beau de Loménie

(57) **Abstract**

A power transmission apparatus for a vehicle includes an engagement mechanism (1) and a switching mechanism (2). The switching mechanism (2) includes: a hydraulic cylinder (21); a regulation valve regulates a hydraulic pressure to be supplied to a first oil chamber and a second oil chamber; a rocking valve (23) switches a state of a hydraulic circuit between a closed circuit state and an open circuit state; and an oil pump (26) supplies the hydraulic pressure to the hydraulic cylinder (21). The switching mechanism (2) switches the engagement mechanism (1) between an engaged state and a disengaged state after the hydraulic circuit is switched from the closed circuit state to the open circuit state by the rocking valve (23). The switching mechanism (2) keeps the engaged state or the disengaged state of the engagement mechanism (1) after switching the engaged state or the disengaged state of the engagement mechanism (1).

## Description

### BACKGROUND OF THE INVENTION

### 1. Field of the Invention

The invention relates to a power transmission apparatus for a vehicle.

### 2. Description of Related Art

As a power transmission apparatus mounted on a vehicle, a power transmission apparatus that includes a switching mechanism switching a state of a selectable one-way clutch between an engaged state and a disengaged state has been known. For example, a power transmission apparatus that includes a hydraulic switching mechanism is disclosed in US 2012/090952 A. The hydraulic switching mechanism operates a cylinder piston by a hydraulic pilot pressure so as to switch a state of a selectable one-way clutch between an engaged state and a disengaged state.

### SUMMARY OF THE INVENTION

In the power transmission apparatus disclosed in US 2012/090952 A, a spring is provided in the cylinder piston. Thus, in order to keep the engaged state or the disengaged state of the selectable one-way clutch, it is necessary to continuously supply a hydraulic pressure that overcomes an elastic force of the spring so as to keep a piston position. For this reason, in the power transmission apparatus disclosed in US 2012/090952 A, a workload of an oil pump that supplies the hydraulic pressure to the cylinder piston is increased, which possibly leads to degraded fuel economy of the vehicle.

The invention prevents an increase in a workload of an oil pump and also prevents degradation of fuel economy of a vehicle.

An aspect of the invention is a power transmission apparatus for a vehicle. The power transmission apparatus includes an engagement mechanism and a switching mechanism configured to switch a state of the engagement mechanism between an engaged state and a disengaged state. The switching mechanism includes: a hydraulic cylinder that has a first oil chamber and a second oil chamber; a regulation valve configured to regulate a hydraulic pressure to the first oil chamber and the second oil chamber; a rocking valve configured to switch a state of a hydraulic circuit between a closed circuit state and an open circuit state, the hydraulic circuit including the first oil chamber and the second oil chamber; and an oil pump configured to supply the hydraulic pressure to the hydraulic cylinder via the regulation valve and the rocking valve. The switching mechanism is configured to switch the state of the engagement mechanism between the engaged state and the disengaged state by regulating the hydraulic pressure to be supplied to the first oil chamber and the second oil chamber by the regulation valve after the hydraulic circuit is switched from the closed circuit state to the open circuit state by the rocking valve. The switching mechanism is configured to keep the engaged state and the disengaged state of the engagement mechanism by switching the hydraulic circuit from the open circuit state to the closed circuit state by the rocking valve after switching the engaged state and the disengaged state of the engagement mechanism.

With the above configuration, the engaged state or the disengaged state of the engagement mechanism can be kept by forming the closed circuit by the rocking valve in the switching mechanism. Thus, it is not necessary to continuously supply the hydraulic pressure state after the engagement mechanism is switched from the engaged state to the disengaged state or after engagement mechanism is switched from the disengaged state to the engaged state. Therefore, it is possible to prevent an increase in a workload of the oil pump and thus to prevent degradation of fuel economy of the vehicle.

In the power transmission apparatus for the vehicle, the regulation valve may be provided between the hydraulic cylinder and the rocking valve. The regulation valve may include: a selection valve configured to selectively supply the hydraulic pressure to the first oil chamber and the second oil chamber; and an application control valve configured to permit and block a supply of the hydraulic pressure from the oil pump. The application control valve may be provided between the rocking valve and the oil pump.

In the power transmission apparatus for the vehicle, the switching mechanism may include: a first electromagnetic valve configured to switch a position of a spool in the application control valve; and a second electromagnetic valve configured to switch a position of a spool in the selection valve. The first electromagnetic valve may be connected to an oil passage between the application control valve and the oil pump and to the application control valve. The second electromagnetic valve may be connected to an oil passage between the selection valve and the rocking valve and to the selection valve.

In the power transmission apparatus for the vehicle, the switching mechanism may include a pressure regulation valve configured to regulate magnitude of the hydraulic pressure by the oil pump. The pressure regulation valve may be connected to an oil passage between the application control valve and the oil pump.

In the power transmission apparatus for the vehicle, the engagement mechanism may include a pocket plate, a notch plate configured to rotate relative to the pocket plate, a selector plate, and an arm configured to cause the selector plate to rotate. The selector plate may be located between the pocket plate and the notch plate. The selector plate may be configured to rotate in a coaxial manner with a rotational axis of the notch plate so as to switch between the engaged state and the disengaged state. The arm may be coupled to the selector plate. The hydraulic cylinder may include a piston that partitions the first oil chamber and the second oil chamber. The piston may be coupled to a tip of the arm.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:

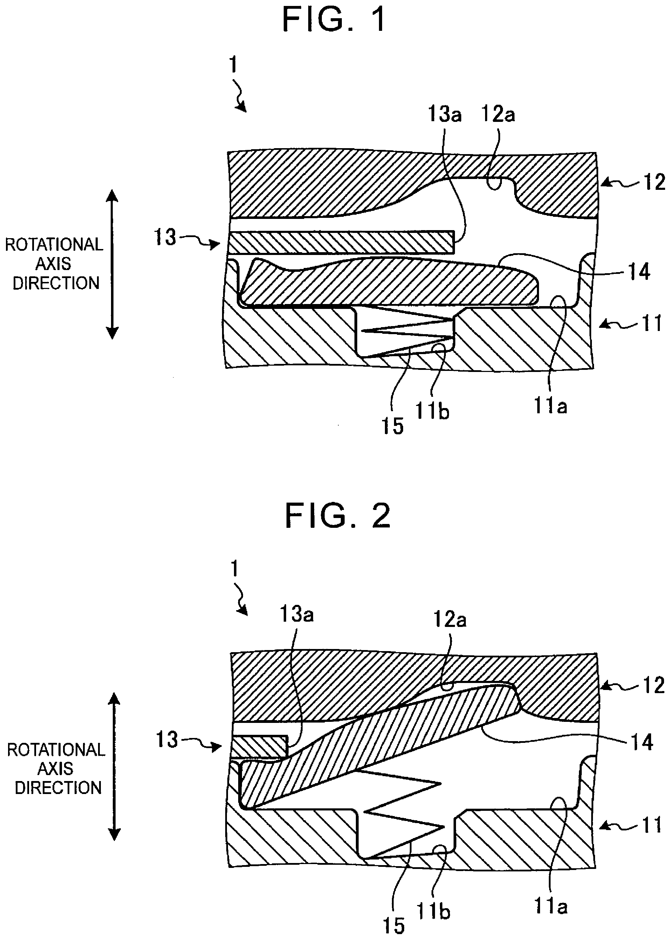

FIG. 1 is a cross-sectional view of a selectable one-way clutch in a power transmission apparatus for a vehicle according to an embodiment of the invention, the selectable one-way clutch being in a disengaged state;
FIG. 2 is a cross-sectional view of the selectable one-way clutch in the power transmission apparatus for the vehicle according to the embodiment of the invention, the selectable one-way clutch being in an engaged state;

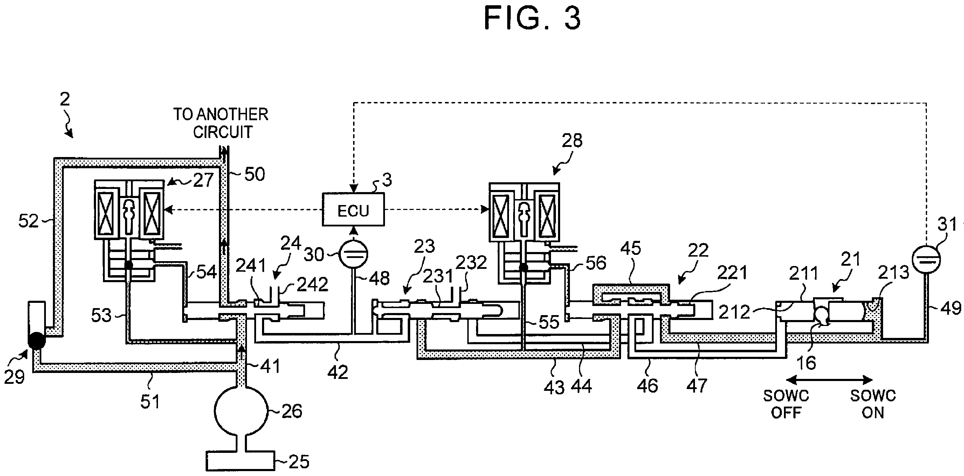

FIG. 3 is a view of a case where the selectable one-way clutch is kept in the disengaged state after the selectable one-way clutch is switched from the engaged state to the disengaged state in a switching mechanism of the power transmission apparatus for the vehicle according to the embodiment of the invention;

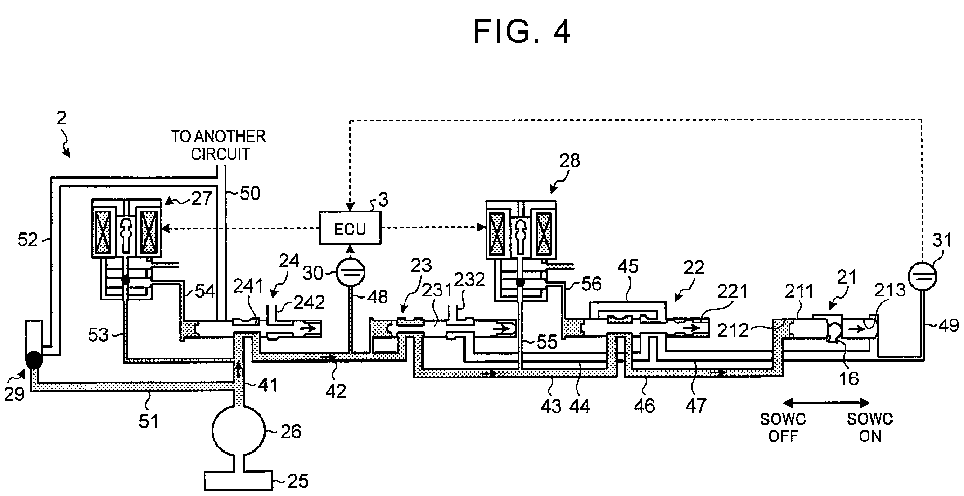

FIG. 4 is a view of a case where a state where the selectable one-way clutch is kept in the disengaged state is switched to a state where the selectable one-way clutch is brought into the engaged state in the switching mechanism of the power transmission apparatus for the vehicle according to the embodiment of the invention;

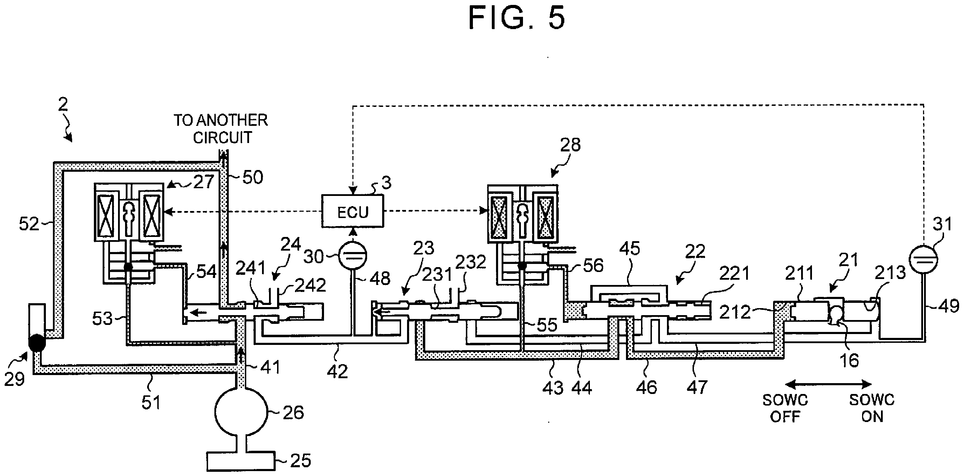

FIG. 5 is a view of a case where the selectable one-way clutch is kept in the engaged state after the selectable one-way clutch is switched from the disengaged state to the engaged state in the switching mechanism of the power transmission apparatus for the vehicle according to the embodiment of the invention;

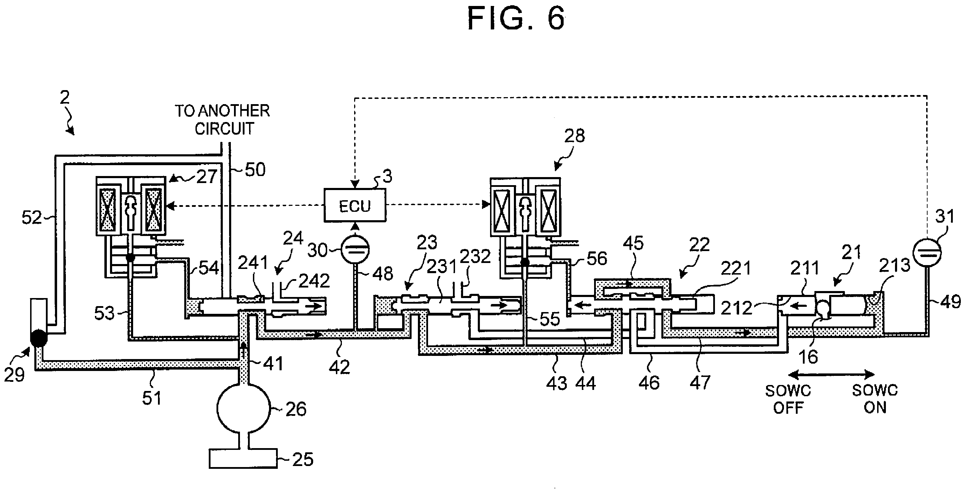

FIG. 6 is a view of a case where a state where the selectable one-way clutch is kept in the engaged state is switched to a state where the selectable one-way clutch is brought into the disengaged state in the switching mechanism of the power transmission apparatus for the vehicle according to the embodiment of the invention; and

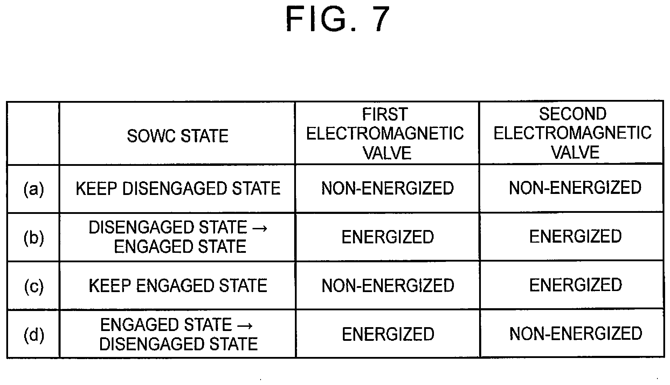

FIG. 7 is an actuation table of the selectable one-way clutch and the switching mechanism in the power transmission apparatus for the vehicle according to the embodiment of the invention.

### DETAILED DESCRIPTION OF EMBODIMENTS

A description will be made on a power transmission apparatus for a vehicle according to an embodiment of the invention with reference to the drawings. Note that the invention is not limited to the following embodiment. As components in the following embodiment, components that can be replaced or can easily be replaced by a person skilled in the art or components that are substantially the same as those in the following embodiment are included.

The power transmission apparatus for the vehicle according to this embodiment (hereinafter simply referred to as a "power transmission apparatus") is mounted on a hybrid vehicle or the like, for example, and, as shown in FIG. 1 to FIG. 3, includes a selectable one-way clutch (hereinafter referred to as a SOWC) 1 as an engagement mechanism, a hydraulic switching mechanism 2, and an electronic control unit (ECU) 3. The ECU 3 has a microcomputer that includes a CPU, ROM, RAM, and the like as a primary component, and executes various programs. A description will hereinafter be made on specific configurations of the SOWC 1 and the switching mechanism 2.

As shown in FIG. 1, the SOWC 1 includes a pocket plate 11, a notch plate 12, and a selector plate 13. Note that the drawing shows an enlarged cross section of a main section of the SOWC 1 and does not show the overall configuration of the SOWC 1.

The pocket plate 11 is formed in a cylindrical shape. Plural pockets (accommodating dents) 11a, each of which is dented in a plate thickness direction, are formed in one surface of the pocket plate 11, that is, a surface that opposes the notch plate 12, and a plate-shaped strut (an engagement piece) 14 is accommodated in each of the pockets 11a. Note that the "plate thickness direction" described above is a direction that matches a rotational axis direction of the notch plate 12.

Each of the pockets 11a is formed at a position that corresponds to a notch 12a of the notch plate 12. Between a dent 11b that is formed in this pocket 11a and the strut 14, an elastic member 15 is disposed to urge the strut 14 to the notch plate 12 side.

The strut 14 is disposed in each of the pockets 11a. It is configured that, when the selector plate 13 rotates in a coaxial manner with the pocket plate 11, this strut 14 is switched between a state where the entire strut 14 is accommodated in the pocket 11a as shown in FIG. 1 (a disengaged state) and a state where one end of the strut 14 is raised to the notch 12a side as shown in FIG. 2 (an engaged state).

The notch plate 12 is formed in an annular shape. The notch plate 12 is disposed in a manner to oppose the surface of the pocket plate 11 formed with the pockets 11a and is configured to be able to rotate relative to the pocket plate 11.

Of surfaces of the notch plate 12, a surface that opposes the pocket plate 11 (the pockets 11a) is formed with the plural notches (engagement dents) 12a, each of which is dented in the plate thickness direction. Each of the notches 12a is a dent in which the end of the strut 14 that is raised to the notch 12a side enters through a window hole 13a of the selector plate 13.

The selector plate 13 is formed in an annular shape. The selector plate 13 is disposed between the pocket plate 11 and the notch plate 12. In the selector plate 13, the window hole 13a, which penetrates in the plate thickness direction, is formed at a position that corresponds to each of the pockets 11a of the pocket plate 11 and each of the struts 14.

Although not shown in FIG. 1 and FIG. 2, an arm 16, which is shown in FIG. 3, is coupled to the selector plate 13. A tip of the arm 16 is connected to a piston 211 of a hydraulic cylinder 21 in the switching mechanism 2, which will be described below. In this way, the arm 16 causes the selector plate 13 to rotate in accordance with drive power of the hydraulic cylinder 21. Note that a detailed operation of the arm 16 will be described below.

As shown in FIG. 1, in the case where a position of the window hole 13a is misaligned with respect to a position of the pocket 11a in a circumferential direction of the SOWC 1, the pocket 11a is closed by a portion of the selector plate 13 that is not formed with the window hole 13a, the strut 14 is pressed to the pocket 11a side by the portion thereof that is not formed with the window hole 13a, and the entire strut 14 is accommodated in the pocket 11a. In this way, the SOWC 1 is brought into the disengaged state (a non-engaged state). Because the strut 14 is not engaged with the notch 12a (the engagement between the strut 14 and the notch 12a is canceled) in this disengaged state, torque is not transmitted between the pocket plate 11 and the notch plate 12.

Meanwhile, as shown in FIG. 2, in the case where the position of the window hole 13a is aligned with the position of the pocket 11a in the circumferential direction of the SOWC 1, the end of the strut 14 is pressed by the elastic member 15 and is raised to the notch plate 12 (the notch 12a) side through the window hole 13a. Then, in the state where the end of the strut 14 is raised to the notch 12a side just as described, when the notch plate 12 rotates in an engagement direction with respect to the pocket plate 11, the strut 14 is engaged with the notch 12a, and the SOWC 1 is brought into the engaged state. Because the strut 14 is engaged with the notch 12a in this engaged state, the torque is transmitted between the pocket plate 11 and the notch plate 12.

The switching mechanism 2 switches the state of the SOWC 1 between the disengaged state and the engaged state. As shown in FIG. 3, the switching mechanism 2 includes the hydraulic cylinder 21, a selection valve 22, a rocking valve 23, an application control valve 24, a strainer 25, an oil pump 26, a first electromagnetic valve 27, a second electromagnetic valve 28, a pressure regulation valve 29, a first hydraulic switch 30, a second hydraulic switch 31, and an oil passage 41 to an oil passage 56.

The switching mechanism 2 functions as a hydraulic circuit and is configured to be switched between an open circuit state and a closed circuit state by the rocking valve 23 as will be described below. The selection valve 22 and the application control valve 24 in the switching mechanism 2 function as regulation valves that regulate a hydraulic pressure to each of two oil chambers in the hydraulic cylinder 21.

The hydraulic cylinder 21 has: the piston 211; and the two oil chambers that are partitioned by the piston 211, that is, a first oil chamber 212 and a second oil chamber 213. The tip of the arm 16 in the SOWC 1 is coupled to the piston 211. In this way, the arm 16 moves in accordance with a position of the piston 211, and the selector plate 13 in the SOWC 1 rotates in accordance with the movement of the arm 16.

In such a hydraulic cylinder 21, as shown in FIG. 3, in the case where the hydraulic pressure is supplied to the second oil chamber 213, as shown in FIG. 1, the strut 14 is pressed to the pocket 11a side, and the SOWC 1 is brought into the disengaged state. Note that "SOWC OFF" shown in FIG. 3 to FIG. 6 indicates that the SOWC 1 is brought into the disengaged state.

Meanwhile, in the hydraulic cylinder 21, as shown in FIG. 4, in the case where the hydraulic pressure is supplied to the first oil chamber 212, as shown in FIG. 2, the end of the strut 14 is raised to the notch 12a side, and the SOWC 1 is brought into the engaged state. Note that "SOWC ON" shown in FIG. 3 to FIG. 6 indicates that the SOWC 1 is brought into the engaged state.

The selection valve 22 selectively supplies the hydraulic pressure to one or the other one of the two oil chambers in the hydraulic cylinder 21. More specifically, the selection valve 22 switches between a state where hydraulic oil is supplied to the first oil chamber 212 and the hydraulic oil in the second oil chamber 213 is discharged from a drain circuit (a circuit including the oil passages 47, 45, 44 and a discharge pipe 232) and a state where the hydraulic oil is supplied to the second oil chamber 213 and the hydraulic oil in the first oil chamber 212 is discharged from a drain circuit (a circuit including the oil passages 46, 45, 44 and the discharge pipe 232).

The selection valve 22 is provided between the hydraulic cylinder 21 and the rocking valve 23. The selection valve 22 includes a spool 221 that is moved by the second electromagnetic valve 28. The selection valve 22 is connected to the first oil chamber 212 by the oil passage 46 and is connected to the second oil chamber 213 by the oil passage 47.

The rocking valve 23 switches the state of the hydraulic circuit, which includes the two oil chambers in the hydraulic cylinder 21, between the closed circuit state and the open circuit state. More specifically, the rocking valve 23 switches between a state where the hydraulic oil in the first oil chamber 212 or the second oil chamber 213 is sealed so as to disable a supply and discharge of the hydraulic oil and a state where sealing of the hydraulic oil in the first oil chamber 212 or the second oil chamber 213 is canceled so as to allow the supply and the discharge of the hydraulic oil.

The rocking valve 23 is provided between the selection valve 22 and the application control valve 24 and includes a spool 231 and the discharge pipe 232. The rocking valve 23 is connected to the selection valve 22 by the oil passages 43, 44.

The application control valve 24 permits or blocks a supply of the hydraulic pressure from the oil pump 26. More specifically, the application control valve 24 switches between a state where the hydraulic pressure in the oil pump 26 is supplied to the hydraulic cylinder 21 side and a state where the hydraulic pressure in the oil pump 26 is supplied to another circuit.

The application control valve 24 is provided between the rocking valve 23 and the oil pump 26. The application control valve 24 includes: a spool 241 that is moved by the first electromagnetic valve 27; and a discharge pipe 242. The application control valve 24 is connected to the rocking valve 23 by the oil passage 42.

The oil pump 26 supplies the hydraulic pressure to the hydraulic cylinder 21 via the application control valve 24, the rocking valve 23, the selection valve 22, and each of the oil passages. The oil pump 26 is connected to the strainer 25. The oil pump 26 is also connected to the application control valve 24 by the oil passage 41.

The first electromagnetic valve 27 is a three-directional electromagnetic valve, for example, and switches a position of the spool 241 in the application control valve 24 on the basis of control by the ECU 3. More specifically, when being brought into an energized state (an ON state), the first electromagnetic valve 27 applies the hydraulic pressure to the spool 241 in the application control valve 24 and moves the spool 241. In this way, the oil passage 41 and the oil passage 42 communicate with each other (see FIG. 4). At this time, the spool 231 in the rocking valve 23 is also moved in an interlocking manner with the movement of the spool 241 in the application control valve 24, and consequently, the oil passage 42 and the oil passage 43 communicate with each other (see the same drawing).

The first electromagnetic valve 27 is connected to the oil passage 41, which is located between the application control valve 24 and the oil pump 26, by the oil passage 53. The first electromagnetic valve 27 is also connected to the application control valve 24 by the oil passage 54.

The second electromagnetic valve 28 is a three-directional electromagnetic valve, for example, and switches a position of the spool 221 in the selection valve 22 on the basis of the control by the ECU 3. More specifically, when being brought into an energized state (an ON state), the second electromagnetic valve 28 applies the hydraulic pressure to the spool 221 in the selection valve 22 and moves the spool 221. In this way, the oil passage 43 and the oil passage 46 communicate with each other, and the oil passage 44 and the oil passage 47 communicate with each other (see FIG. 4).

The second electromagnetic valve 28 is connected to the oil passage 43, which is located between the selection valve 22 and the rocking valve 23, by the oil passage 55. The second electromagnetic valve 28 is also connected to the selection valve 22 by the oil passage 56.

The pressure regulation valve 29 regulates magnitude of the hydraulic pressure generated by the oil pump 26. The pressure regulation valve 29 is connected to the oil passage 41, which is located between the application control valve 24 and the oil pump 26, by the oil passage 51. The pressure regulation valve 29 is also connected to the oil passage 50, which is located between the application control valve 24 and the other circuit, by the oil passage 52.

The first hydraulic switch 30 detects whether the hydraulic pressure is supplied from the application control valve 24 side to the rocking valve 23 side. More specifically, when the magnitude of the hydraulic pressure that is supplied from the application control valve 24 side to the rocking valve 23 side exceeds a specified threshold, the first hydraulic switch 30 outputs a detection signal to the ECU 3. The first hydraulic switch 30 is connected to the oil passage 42, which is located between the rocking valve 23 and the application control valve 24, by the oil passage 48.

The second hydraulic switch 31 detects whether the hydraulic pressure is supplied to the second oil chamber 213. More specifically, when the magnitude of the hydraulic pressure that is supplied to the second oil chamber 213 exceeds a specified threshold, the second hydraulic switch 31 outputs a detection signal to the ECU 3. The second hydraulic switch 31 is connected to the oil passage 47, which is located between the second oil chamber 213 and the selection valve 22, by the oil passage 49.

A description will hereinafter be made on an operation of the power transmission apparatus according to this embodiment with reference to FIG. 3 to FIG. 7. Note that, in FIG. 3 to FIG. 6, dotted hatches in each of the oil passages represent the hydraulic oil in each of the oil passages, an arrow in each of the oil passages indicates a flow of the hydraulic oil, an arrow in each of the valves indicates the movement of the spool in each of the valves, and dotted hatches in each of the electromagnetic valves represents the energized state of each of the electromagnetic valves.

FIG. 3 shows the switching mechanism 2 in the case where the SOWC 1 is kept in the disengaged state after the SOWC 1 is switched from the engaged state (see FIG. 2) to the disengaged state (see FIG. 1). As shown in (a) of FIG. 7, when the disengaged state of the SOWC 1 is kept, the first electromagnetic valve 27 and the second electromagnetic valve 28 are each brought into a non-energized state.

When the first electromagnetic valve 27 is in the non-energized state, the oil passage 41 and the oil passage 50 communicate with each other. In this way, the hydraulic pressure from the oil pump 26 is not supplied to the hydraulic cylinder 21 side but only supplied to the other circuit. When the second electromagnetic valve 28 is in the non-energized state, the hydraulic oil is sealed in the second oil chamber 213 and the oil passages 47, 45, 43, and the position of the piston 211 is kept on the "SOWC OFF" side by a volume of the hydraulic oil. That is, the SOWC 1 is kept in the disengaged state (see FIG. 1). In this way, even when the hydraulic pressure is not continuously supplied to the piston 211, the position of the piston 211 is kept, and thus an increase in a workload of the oil pump 26 is prevented.

FIG. 4 shows the switching mechanism 2 in the case where the state where the SOWC 1 is kept in the disengaged state as shown in FIG. 3 is switched to a state where the SOWC 1 is brought into the engaged state. As shown in (b) of FIG. 7, when the SOWC 1 is switched from the disengaged state to the engaged state, the first electromagnetic valve 27 and the second electromagnetic valve 28 are each switched from the non-energized state to the energized state.

When the first electromagnetic valve 27 is switched from the non-energized state to the energized state, the state of the application control valve 24 is switched by the hydraulic pressure, and the oil passage 41 and the oil passage 42 communicate with each other. In this way, the hydraulic oil is supplied to the rocking valve 23. Then, when the state of the rocking valve 23 is switched by the hydraulic pressure of the hydraulic oil, the oil passage 42 and the oil passage 43 communicate with each other, and, at the same time, the oil passage 44 and the discharge pipe 232 also communicate with each other. When the state of the application control valve 24 is switched by the energization of the first electromagnetic valve 27, just as described, the state of the rocking valve 23 is also switched in an interlocking manner therewith.

When the second electromagnetic valve 28 is switched from the non-energized state to the energized state, the state of the selection valve 22 is switched by the hydraulic pressure, and the oil passage 43 and the oil passage 46 communicate with each other. At the same time, the oil passage 44, the oil passage 47, and the discharge pipe 232 also communicate with each other. In this way, the hydraulic oil is supplied to the first oil chamber 212. Then, the piston 211 is switched to the "SOWC ON" side by the hydraulic pressure of the hydraulic oil, and, at the same time, the hydraulic oil in the second oil chamber 213 is discharged from the discharge pipe 232 via the oil passages 47, 44.

Next, when the hydraulic oil is sealed between the oil pump 26 and the hydraulic cylinder 21 and a pressure in the oil passages 41, 42, 43, 46 and the first oil chamber 212 is increased, the pressure regulation valve 29 is opened. In this way, the pressure in the oil passages 41, 42, 43, 46 and the first oil chamber 212 is kept at an open pressure (a cracking pressure) of the pressure regulation valve 29.

FIG. 5 shows the switching mechanism 2 in the case where the SOWC 1 is kept in the engaged state after the SOWC 1 is switched from the disengaged state to the engaged state as shown in FIG. 4. As shown in (c) of FIG. 7, when the SOWC 1 is kept in the engaged state, the first electromagnetic valve 27 is switched from the energized state to the non-energized state while the second electromagnetic valve 28 remains in the energized state.

When the first electromagnetic valve 27 is switched from the energized state to the non-energized state, the state of the application control valve 24 is switched, and the oil passage 41 and the oil passage 50 communicate with each other. In this way, the hydraulic pressure from the oil pump 26 is no longer supplied to the hydraulic cylinder 21 side but only supplied to the other circuit. In addition, the hydraulic oil is sealed in the first oil chamber 212 and the oil passages 46, 43, and the position of the piston 211 is kept on the "SOWC ON" side by the volume of the hydraulic oil. That is, the SOWC 1 is kept in the engaged state (see FIG. 2). In this way, even when the hydraulic oil is not continuously supplied to the piston 211, the position of the piston 211 is kept, and thus the increase in the workload of the oil pump 26 is prevented.

FIG. 6 shows the switching mechanism 2 in the case where the state where the SOWC 1 is kept in the engaged state as shown in FIG. 5 is switched to a state where the SOWC 1 is brought into the disengaged state. As shown in (d) of FIG. 7, when the SOWC 1 is switched from the engaged state to the disengaged state, the first electromagnetic valve 27 is switched from the non-energized state to the energized state, and the second electromagnetic valve 28 is switched from the energized state to the non-energized state.

When the first electromagnetic valve 27 is switched from the non-energized state to the energized state, the state of the application control valve 24 is switched by the hydraulic pressure, and the oil passage 41 and the oil passage 42 communicate with each other. In this way, the hydraulic oil is supplied to the rocking valve 23. Then, when the state of the rocking valve 23 is switched by the hydraulic pressure of the hydraulic oil, the oil passage 42 and the oil passage 43 communicate with each other, and, at the same time, the oil passage 44 and the discharge pipe 232 also communicate with each other.

When the second electromagnetic valve 28 is switched from the energized state to the non-energized state, the state of the selection valve 22 is switched, and the oil passage 47, the oil passage 45, and the oil passage 43 communicate with each other. At the same time, the oil passage 46, the oil passage 44, and the discharge pipe 232 also communicate with each other. In this way, the hydraulic oil is supplied to the second oil chamber 213. Then, the piston 211 is switched to the "SOWC OFF" side by the hydraulic pressure of the hydraulic oil, and, at the same time, the hydraulic oil in the first oil chamber 212 is discharged from the discharge pipe 232 via the oil passages 46, 44.

Next, when the hydraulic oil is sealed between the oil pump 26 and the hydraulic cylinder 21 and a pressure in the oil passages 41, 42, 43, 45, 47 and the second oil chamber 213 is increased, the pressure regulation valve 29 is opened. In this way, the pressure in the oil passages 41, 42, 43, 45, 47 and the second oil chamber 213 is kept at the open pressure (the cracking pressure) of the pressure regulation valve 29.

Note that, in FIG. 3 and FIG. 5, an amount of a keeping force that keeps the position of the piston 211 after the movement is determined by an amount of pressure loss caused by leakage of the hydraulic oil from a gap in a sliding section of each of the valves (the selection valve 22, the rocking valve 23, and the application control valve 24), for example, and the amount of the pressure loss is generally small. Thus, the keeping force that keeps the position of the piston 211 is also small, and the workload of the oil pump 26 is not increased in the states shown in FIG. 3 and FIG. 5.

Meanwhile, in FIG. 4 and FIG. 6, the amount of the keeping force that keeps the position of the piston 211 after the movement is determined by magnitude of the open pressure (the cracking pressure) of the pressure regulation valve 29. Accordingly, when the state of the SOWC 1 is switched as shown in the drawing, the keeping force of the piston 211 can be set to the large keeping force. Thus, the state of the SOWC 1 can reliably be switched between the disengaged state and the engaged state. Note that, in the case where the SOWC 1 is kept in the disengaged state after the state thereof shown in FIG. 6, the switching mechanism 2 only has to be brought into the state shown in FIG. 3 and (a) of FIG. 7.

As described above, in the power transmission apparatus according to this embodiment, the first electromagnetic valve 27 is brought into the energized state in a transition state where the state of the SOWC 1 is switched (see (b), (d) of FIG. 7). Then, in a stationary state after the state of the SOWC 1 is switched (see (a), (c) of FIG. 7), the first electromagnetic valve 27 is brought into the non-energized state. In this way, the rocking valve 23 seals the hydraulic oil in the first oil chamber 212 or the second oil chamber 213, so as to keep the position of the piston 211 by the volume of the hydraulic oil.

According to the power transmission apparatus according to this embodiment as described so far, as shown in FIG. 4 and FIG. 6, after the rocking valve 23 switches the state of the hydraulic circuit from the closed circuit state to the open circuit state, the selection valve 22 regulates the hydraulic pressure to be supplied to the first oil chamber 212 or the second oil chamber 213. In this way, the engaged state or the disengaged state of the SOWC 1 can be switched. In addition, according to the power transmission apparatus, as shown in FIG. 3 and FIG. 5, after the engaged state or the disengaged state of the SOWC 1 is switched, the rocking valve 23 switches the state of the hydraulic circuit from the open circuit state to the closed circuit state. In this way, the engaged state or the disengaged state of the SOWC 1 can be kept.

As described above, according to the power transmission apparatus according to this embodiment, the engaged state or the disengaged state of the SOWC 1 can be kept by forming the closed circuit by the rocking valve 23 in the switching mechanism 2. Thus, it is not necessary to continuously supply the hydraulic pressure in the stationary state after the SOWC 1 is switched from the engaged state to the disengaged state or after the SOWC 1 is switched from the disengaged state to the engaged state. Therefore, it is possible to prevent the increase in the workload of the oil pump 26 and thus to prevent degradation of fuel economy of the vehicle.

The specific description has been made so far on the power transmission apparatus for the vehicle according to the invention by the embodiment. However, the gist of the invention is not limited to the description but should be interpreted broadly on the basis of the claims. It is needless to say that various changes, modifications, and the like made on the basis of the description are included within the scope of the claims.

## Claims

1. A power transmission apparatus for a vehicle, the power transmission apparatus comprising:
an engagement mechanism (1); and
a switching mechanism (2) configured to switch a state of the engagement mechanism (1) between an engaged state and a disengaged state,
the switching mechanism (2) including: a hydraulic cylinder (21) that has a first oil chamber and a second oil chamber; a regulation valve configured to regulate a hydraulic pressure to be supplied to the first oil chamber and the second oil chamber; a rocking valve (23) configured to switch a state of a hydraulic circuit between a closed circuit state and an open circuit state, the hydraulic circuit including the first oil chamber and the second oil chamber; and an oil pump (26) configured to supply the hydraulic pressure to the hydraulic cylinder (21) via the regulation valve and the rocking valve (23),
the switching mechanism (2) being configured to switch the state of the engagement mechanism (1) between the engaged state and the disengaged state by regulating the hydraulic pressure to be supplied to the first oil chamber and the second oil chamber by the regulation valve after the hydraulic circuit is switched from the closed circuit state to the open circuit state by the rocking valve (23), and
the switching mechanism (2) being configured to keep the engaged state and the disengaged state of the engagement mechanism (1) by switching the hydraulic circuit from the open circuit state to the closed circuit state by the rocking valve (23) after switching the engaged state and the disengaged state of the engagement mechanism (1).

2. The power transmission apparatus for the vehicle according to claim 1, wherein
the regulation valve is provided between the hydraulic cylinder (21) and the rocking valve (23),
the regulation valve includes: a selection valve (22) configured to selectively supply the hydraulic pressure to the first oil chamber and the second oil chamber; and an application control valve (24) configured to permit and block a supply of the hydraulic pressure from the oil pump (26), and
the application control valve (24) is provided between the rocking valve (23) and the oil pump (26).

3. The power transmission apparatus for the vehicle according to claim 2, wherein
the switching mechanism (2) includes: a first electromagnetic valve (27) configured to switch a position of a spool (241) in the application control valve (24); and a second electromagnetic valve (28) configured to switch a position of a spool (221) in the selection valve (22),
the first electromagnetic valve (27) being connected to an oil passage between the application control valve (24) and the oil pump (26) and to the application control valve (24), and
the second electromagnetic valve (28) being connected to an oil passage between the selection valve (22) and the rocking valve (23) and to the selection valve (22).

4. The power transmission apparatus for the vehicle according to claim 2, wherein
the switching mechanism (2) includes a pressure regulation valve (29) configured to regulate magnitude of the hydraulic pressure by the oil pump (26), the pressure regulation valve (29) being connected to an oil passage between the application control valve (24) and the oil pump (26).

5. The power transmission apparatus for the vehicle according to claim 3, wherein
the switching mechanism (2) includes a pressure regulation valve (29) configured to regulate magnitude of the hydraulic pressure by the oil pump (26), the pressure regulation valve (29) being connected to the oil passage between the application control valve (24) and the oil pump (26).

6. The power transmission apparatus for the vehicle according to any one of claims 1 to 5, wherein
the engagement mechanism (1) includes a pocket plate (11), a notch plate (12) configured to rotate relative to the pocket plate (11), a selector plate (13), and an arm (16) configured to cause the selector plate (13) to rotate,
the selector plate (13) being located between the pocket plate (11) and the notch plate (12),
the selector plate (13) being configured to rotate in a coaxial manner with a rotational axis of the notch plate (12) so as to switch between the engaged state and the disengaged state, and
the arm (16) being coupled to the selector plate (13), and
the hydraulic cylinder (21) includes a piston (211) that partitions the first oil chamber and the second oil chamber, the piston (211) being coupled to a tip of the arm (16).
